# FASCICULE DE BREVET EUROPEEN

(11) **EP 1 345 810 B1**
(45) Date de publication et mention de la délivrance du brevet: **17.11.2004**
(21) Numéro de dépôt: 01995756.2
(22) Date de dépôt: 21.12.2001
(51) Int. Cl.: B64D 11/06

(54) **FAUTEUIL CONVERTIBLE EN LIT, NOTAMMENT POUR AERONEF**
IN EIN BETT UMWANDELBARER SITZ, INSBESONDERE FÜR EIN FLUGZEUG
SEAT CONVERTIBLE INTO A BED, IN PARTICULAR FOR AIRCRAFT

(30) Priorité: 26.12.2000 FR 0017034
(43) Date de publication de la demande: 24.09.2003
(73) Titulaire: Eads Sogerma Services, 33701 Merignac (FR)
(72) Inventeur: VERNY, Christian, F-17620 Champagne (FR); CECINAS, Laurent, F-17300 Rochefort (FR); MARTIN, Gabriel, F-17620 Echillais (FR)
(74) Mandataire: Poulin, Gérard
(86) Numéro de dépôt international: PCT/FR2001/004153
(87) Numéro de publication internationale: WO 2002/051703

(56) Documents cités:
- EP-A- 0 869 060
- EP-A- 0 957 025
- US-A- 5 788 183

## Description

### Domaine technique

L'invention concerne un fauteuil convertible en lit, prévu pour être utilisé sur un véhicule tel qu'un aéronef.

De façon plus précise, l'invention concerne un fauteuil convertible en lit, doté d'une commande unique lui permettant d'obtenir une position confortable du point de vue ergonomique sur toute sa plage de réglage.

Un fauteuil conforme à l'invention trouve une application privilégiée sur les aéronefs, et notamment sur les avions destinés au transport de passagers ainsi que sur les avions d'affaire. Toutefois, il peut aussi être utilisé sur d'autres types de véhicules tels que des trains et des autocars.

### Etat de la technique

Les fauteuils les plus confortables qui équipent les aéronefs comprennent une structure fixe, qui sert de support à une structure basculante ou mobile conçue pour pouvoir occuper deux postures extrêmes ainsi qu'une multitude de postures intermédiaires plus ou moins ergonomiques.

Dans une première de ces postures extrêmes, la structure basculante du fauteuil a la forme d'un siège dont le dossier est relevé, c'est-à-dire sensiblement vertical. Cette posture est notamment utilisée lors du décollage et de l'atterrissage de l'aéronef.

Dans la deuxième posture extrême, la structure basculante a la forme d'une couchette ou d'un lit. Cette posture permet au passager de se reposer lorsqu'il le désire.

Les fauteuils existants qui sont aptes à occuper ces deux postures extrêmes comprennent habituellement une assise, un dossier articulé sur un bord arrière de l'assise et un repose jambes articulé sur un bord avant de l'assise.

Parmi les fauteuils existants, certains sont conçus de telle sorte que l'inclinaison de l'assise est liée à celle du dossier sur toute la plage de réglage du fauteuil. Le document GB-A-2 295 962 décrit un fauteuil de ce type, dans lequel l'extrémité avant de l'assise repose sur un chariot qui roule sur le plancher, vers l'avant ou vers l'arrière, lorsque l'assise et le dossier se déplacent vers leur posture "lit" ou vers leur posture "siège", respectivement. Une commande séparée permet de faire passer le repose jambes de sa position escamotée dans sa position déployée, et inversement.

Ce type de fauteuil a pour inconvénient que le passager doit effectuer deux réglages différents a chaque fois qu'il souhaite modifier la posture du fauteuil. L'obtention de postures confortables du point de vue ergonomique est donc difficile.

De plus, l'existence de deux réglages indépendants complique le boîtier de commande, qu'il soit manuel ou électrique.

De surcroît, l'agencement décrit dans le document GB-A-2 295 962 est tel que le chariot lié à l'extrémité avant de l'assise risque de basculer vers le haut en cas de trou d'air, et aussi de produire une usure accélérée du plancher.

Il existe aussi certains fauteuils d'aéronefs dans lesquels le repose jambes comporte une extension dont le déploiement est lié à l'inclinaison du repose jambes, sur toute la plage d'inclinaison de celui-ci.

Les fauteuils de ce type ont des inconvénients comparables aux précédents en ce qui concerne la complexité du boîtier de commande et la difficulté, pour le passager, à trouver une position confortable du point de vue ergonomique.

D'autres fauteuils existants sont conçus de telle sorte que les mouvements du dossier, de l'assise et du repose jambes sont liés. Toutefois, cette liaison n'est utilisable que pour amener le fauteuil dans l'une de ses postures extrêmes, c'est-à-dire soit pour amener le fauteuil dans sa posture "siège" utilisée lors de l'atterrissage et du décollage, soit pour amener le fauteuil dans sa posture "lit". En d'autres termes, ce type de fauteuils ne permet pas d'atteindre une posture intermédiaire quelconque au moyen d'une commande unique.

Les documents EP-A-0 869 061, qui représente l'art antérieur le plus proche et qui montre toutes les caractéristiques du préambule de la revendication indépendante, et EP-A-1 043 225 décrivent un fauteuil d'aéronef dans lequel un premier moteur électrique commande le déplacement du dossier et un deuxième moteur électrique commande le déplacement relatif entre le repose jambes et l'assise, le repose jambes étant en appui sur le plancher. Un microprocesseur pilote le deuxième moteur électrique en réponse aux signaux délivrés par un potentiomètre lié au premier moteur électrique, de telle sorte que l'angle entre le repose jambes et l'assise dépend de la position occupée par le dossier. En conséquence, la position de l'assise est déterminée simultanément par ces deux réglages.

Ce type de fauteuil reste relativement complexe, du fait qu'il utilise deux moteurs électriques distincts. De plus, l'extrémité basse du repose jambes reste en permanence en appui sur le plancher, de sorte que, dans sa posture "lit", le fauteuil est fortement incliné. Cet agencement est également peu satisfaisant du fait que l'ensemble assise-repose jambes risque de basculer vers le haut en cas de trous d'air, et aussi en raison de l'usure qu'il entraîne sur le plancher, à l'emplacement où celui-ci est en contact avec le repose jambes.

### Exposé de l'invention

L'invention a précisément pour objet un fauteuil dont la conception originale lui permet de prendre automatiquement une position confortable du point de vue ergonomique sur toute sa plage de réglage, au moyen d'une commande unique et sans qu'une pièce mobile soit en appui sur le plancher.

Conformément à l'invention, ce résultat est obtenu au moyen d'un fauteuil convertible en lit, pour un véhicule tel qu'un aéronef, ledit fauteuil comprenant une structure fixe et une structure mobile comportant une assise, un dossier articulé sur l'assise et un repose jambes également articulé sur l'assise, des premiers moyens de guidage étant interposés entre la structure fixe et le dossier, pour permettre un déplacement contrôlé du dossier entre une première position extrême sensiblement verticale et une deuxième position extrême sensiblement horizontale, et des deuxièmes moyens de guidage étant interposés entre la structure fixe et l'assise, de sorte que le déplacement contrôlé du dossier entre sa première position et sa deuxième position s'accompagne d'un déplacement correspondant de l'assise, caractérisé en ce qu'une partie des deuxièmes moyens de guidage relie le repose-jambes à la structure fixe et à l'assise, de sorte que le déplacement contrôlé du dossier s'accompagne également d'un déplacement correspondant du repose-jambes, qui a pour effet de déplacer automatiquement la structure mobile entre une première posture extrême en forme de siège et une deuxième posture extrême en forme de lit, en passant par des postures intermédiaires données.

Grâce à cet agencement, les inclinaisons de l'assise, du dossier et du repose jambes sont liées mécaniquement. Il est donc possible, au moyen d'une commande unique manuelle ou motorisée, de déplacer la structure mobile entre ses deux postures extrêmes en obtenant des positions confortables du point de vue ergonomique sur toute la plage de réglage du fauteuil.

Dans un mode de réalisation préféré de l'inven tion, les deuxièmes moyens de guidage comprennent au moins une première bielle dont les extrémités sont articulées respectivement sur la structure fixe et sur l'assise, de façon telle que celle-ci soit apte à prendre des positions intermédiaires ergonomiques.

De préférence, les deuxièmes moyens de guidage comprennent aussi un premier mécanisme de commande reliant le repose jambes à la structure fixe et à la première bielle.

Avantageusement, le premier mécanisme de commande comprend alors au moins une deuxième bielle dont les extrémités sont articulées respectivement sur une troisième bielle et sur une quatrième bielle, elles-mêmes articulées respectivement sur la structure fixe et sur le repose jambes, à l'opposé de la deuxième bielle, celle-ci étant elle-même articulée sur la première bielle entre les extrémités des première et deuxième bielles.

De préférence, la structure mobile comprend également une extension de repose jambes, apte à coulisser sur le repose jambes entre une position extrême rétractée et une position extrême sortie, et un deuxième mécanisme de commande reliant ladite extension à l'assise et au repose jambes, de façon telle qu'une déformation de la structure mobile entre sa première posture extrême et sa deuxième posture extrême s'accompagne d'un déplacement progressif de l'extension entre sa position extrême rétractée et sa position extrême sortie.

Dans ce cas, le deuxième mécanisme de commande comprend avantageusement au moins une cinquième bielle dont les extrémités sont articulées respectivement sur une sixième bielle et sur une septième bielle, elles-mêmes articulées respectivement sur l'assise et sur l'extension de repose jambes, à l'opposé de la cinquième bielle, celle-ci étant elle-même articulée sur le repose jambes, entre les extrémités de la cinquième bielle.

En variante, le deuxième mécanisme de commande comprend au moins un câble enroulé sur des poulies portées respectivement par l'assise, le repose jambes et l'extension de repose jambes.

Dans le mode de réalisation préféré de l'invention, les premiers moyens de guidage comprennent des premiers organes de guidage montés sur une partie haute du dossier, des premières glissières liées à la structure fixe et avec lesquelles coopèrent les premiers organes de guidage, des deuxièmes organes de guidage montés sur une partie basse du dossier et des deuxièmes glissières liées au support fixe et avec lesquelles coopèrent les deuxièmes organes de guidage.

Dans ce cas, les premières glissières sont, de préférence sensiblement verticales et les deuxièmes glissières sensiblement horizontales.

Avantageusement, les deuxièmes organes de guidage sont centrés sur un axe d'articulation du dossier sur l'assise.

### Brève description des dessins

On décrira à présent, à titre d'exemple illustratif et nullement limitatif, un mode de réalisation préféré de l'invention, en se référant aux dessins annexés, dans lesquels :
- la figure 1 est une vue de côté qui représente, de façon très schématique, la structure mobile d'un fauteuil conforme à l'invention ;
- la figure 2 est une vue de dessous, également très schématique, illustrant en particulier le mécanisme de commande d'une extension de repose jambes ;
- la figure 3 est une vue en perspective éclatée, prise de devant, qui représente un mode de réalisation préféré du fauteuil selon l'invention ;
- la figure 4 est une vue en perspective, prise de derrière, du fauteuil de la figure 3 ; et
- la figure 5 est une vue en perspective, prise de dessous, du fauteuil de la figure 3.

### Description détaillée d'un mode de réalisation préféré de l'invention

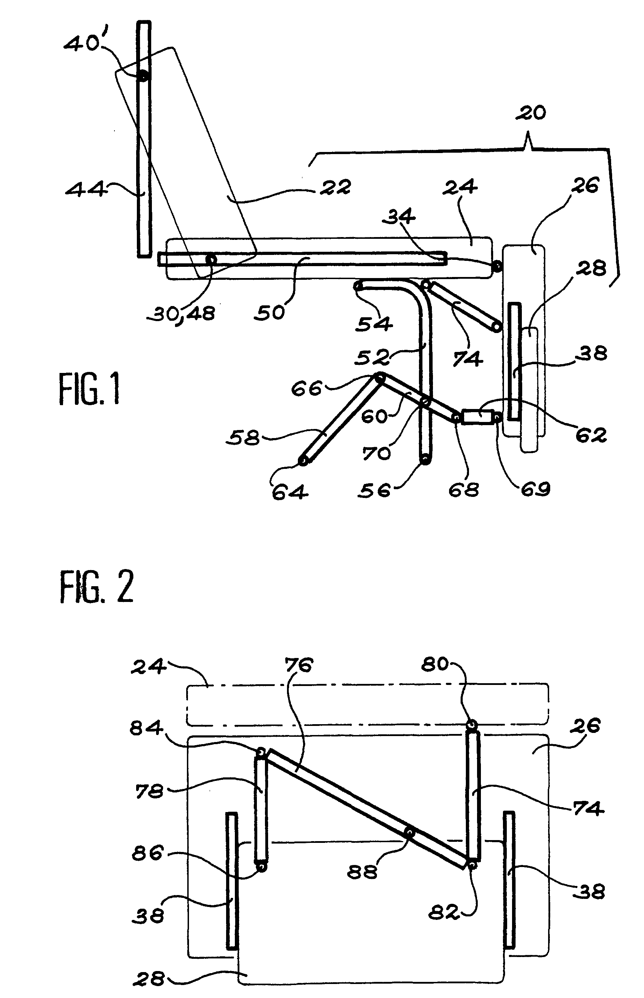

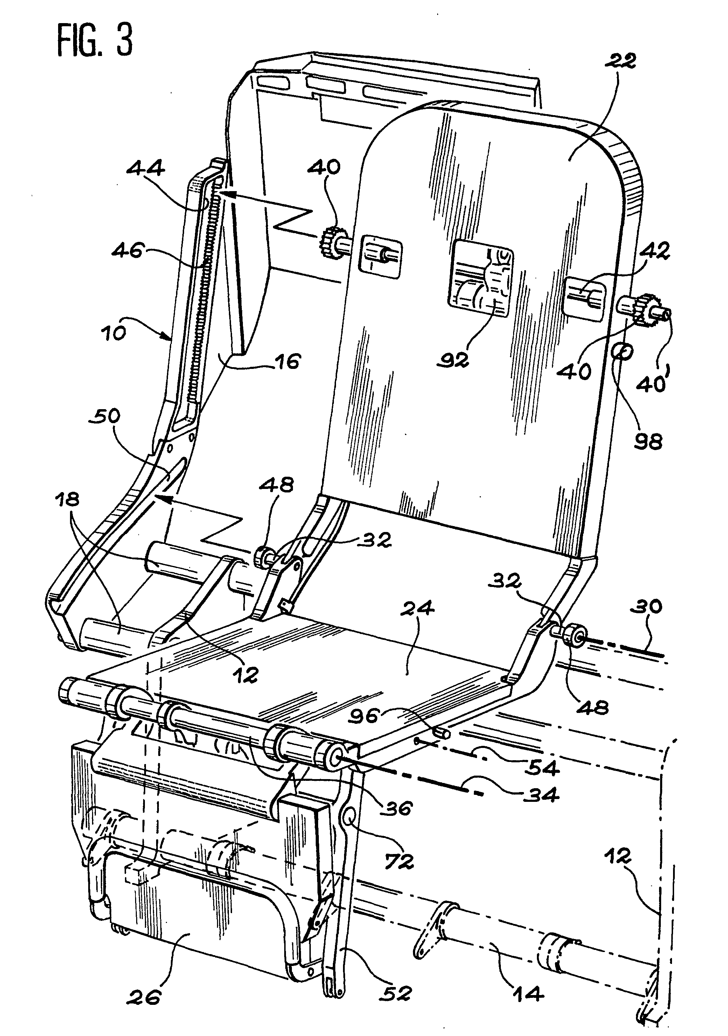

La description d'un mode de réalisation préféré du fauteuil selon l'invention est faite en se référant, d'une part, aux vues très schématiques des figures 1 et 2 et, d'autre part, aux vues détaillées illustrées sur les figures 3 à 5.

Dans l'ensemble de la description, les termes "avant" et "arrière" se réfèrent respectivement à l'avant et à l'arrière du fauteuil proprement dit.

Le fauteuil comprend une structure fixe 10 dont une partie seulement est illustrée sur la figure 3. La structure fixe 10 est prévue pour être montée sur le plancher (non représenté) d'un véhicule tel qu'un aéronef, par des moyens de fixation bien connus de l'homme du métier et qui ne seront pas décrits ici, dans un souci de simplification.

La structure fixe 10 peut être affectée à un unique fauteuil ou, au contraire, appartenir à deux fauteuils placés côte à côte. Elle comprend deux pieds 12, par lesquels la structure repose sur le plancher, et une barre d'ancrage 14 reliant les pieds 12 entre eux, à leurs extrémités avant, à proximité du plancher. La structure fixe 10 comprend également deux plaques latérales 16 formant accoudoirs, ainsi que deux barres transversales 18, par lesquelles les plaques 16 sont reliées aux pieds 12. La barre d'ancrage 14 ainsi que les barres transversales 18 sont orientées selon une direction transversale par rapport au fauteuil.

Le fauteuil selon l'invention comprend également une structure mobile ou basculante 20, intégralement supportée par la structure fixe 10 et montée sur celle-ci de façon à pouvoir se déplacer entre une première posture extrême en forme de siège et une deuxième posture extrême en forme de lit ou de couchette, en passant par une infinité de postures intermédiaires données, choisies de façon à être toutes confortables pour le passager, du point de vue ergonomique.

La structure mobile 20 comprend une assise 24, un dossier 22, un repose jambes 26 et une extension 28 de repose jambes.

Le bord inférieur du dossier 22 est articulé sur le bord arrière de l'assise 24 par un premier axe d'articulation 30, matérialisé par deux tourillons 32 alignés. Le bord supérieur du repose jambes 26 est articulé sur le bord avant de l'assise 24 par un deuxième axe d'articulation 34, matérialisé par un tourillon 36. Les axes d'articulation 30 et 34 sont orientés selon une direction transversale par rapport au fauteuil.

L'extension 28 de repose jambes est supportée par le repose jambes 26 de façon à pouvoir coulisser dans le plan de celui-ci, perpendiculairement à l'axe d'articulation 34, en éloignement et en rapprochement de celui-ci, entre une position extrême rétractée et une position extrême sortie. A cet effet, des glissières 38 (figures 1 et 2) sont interposées entre l'extension 28 et le repose jambes 26.

Des moyens de guidage sont prévus tout d'abord entre l'assise 24 du fauteuil et la structure fixe 10. Ces moyens de guidage comprennent deux organes de guidage constitués dans ce cas par des galets 48. Les galets 48 peuvent être respectivement, mais non exclusivement montés sur chacun des tourillons 32 matérialisant l'axe d'articulation 30 de l'assise 24 sur le dossier 22. Chacun des galets 48 est reçu dans une glissière 50 formée sur la face intérieure de la plaque latérale 16 située sur le même côté du fauteuil. Les glissières 50 sont sensiblement rectilignes et horizontales.

Afin d'assurer un déplacement parfaitement contrôlé de l'assise 24, les moyens de guidage précités comprennent également au moins une première bielle 52 (deux bielles 52 sont utilisées dans le mode de réalisation illustré sur les figures 3 à 5). L'extrémité haute de chaque bielle 52 est articulée sous une partie avant de l'assise 24 par un axe d'articulation 54 et l'extrémité basse de chaque bielle 52 est articulée sur la structure fixe 10 par un axe d'articulation 56. L'axe d'articulation 54 est situé en une position telle de l'assise que celle-ci se trouve en une position sensiblement horizontale aux deux extrémités de sa course, en passant par des positions intermédiaires ergonomiques. Les axes d'articulation 54 et 56 sont orientés selon une direction transversale par rapport au fauteuil.

De façon plus précise, l'axe d'articulation 56 relie la bielle 52 à une chape solidaire de la barre d'ancrage 14. Les bielles 52 sont sensiblement verticales lorsque la structure mobile 12 occupe sa première posture extrême, en forme de siège, comme l'illustrent les figures 1, 3 et 4.

D'autres moyens de guidage sont prévus entre la structure fixe 10, le dossier 22 et le repose jambes 26, afin que le déplacement de l'assise 24 entre ses deux positions extrêmes se traduise par des déplacements correspondants, contrôlés, du dossier 22 et du repose jambes 26. Ces derniers déplacements sont tels que la structure mobile 20 se déplace alors automatiquement entre ses deux postures extrêmes, respectivement en forme de siège et en forme de lit.

Des moyens de guidage sont également prévus entre le dossier 22 du fauteuil et la structure fixe 10. Ces moyens de guidage assurent un déplacement contrôlé du dossier 22 entre une première position extrême sensiblement verticale et une deuxième position extrême sensiblement horizontale.

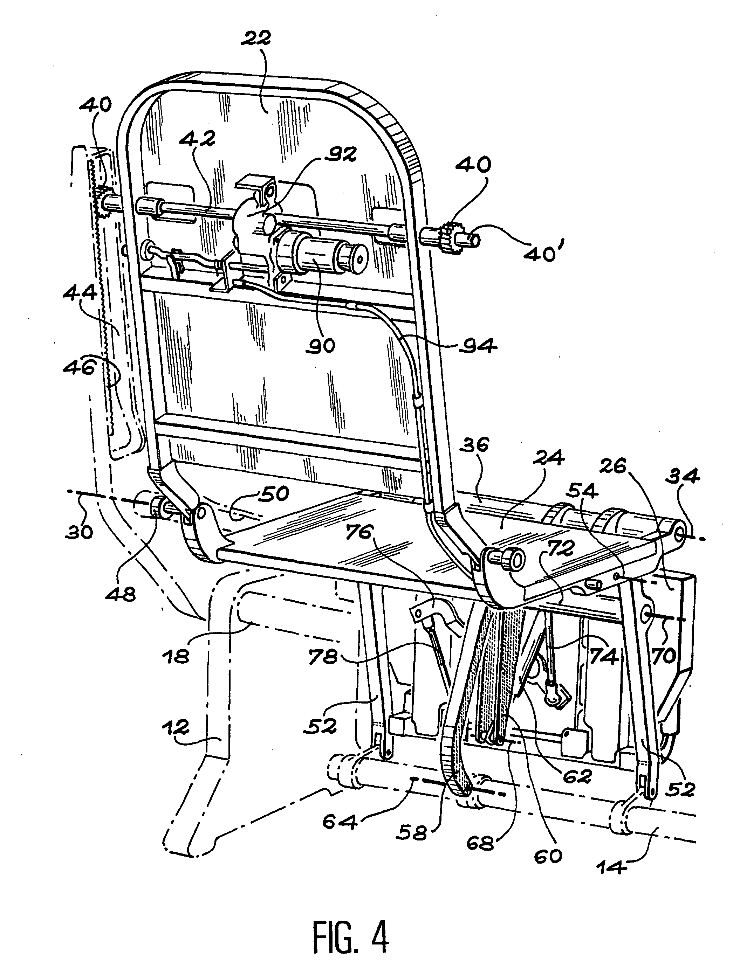

Dans le mode de réalisation représenté sur les figures 3 et 4, ces derniers moyens de guidage comprennent deux organes de guidage constitués dans ce cas par des galets 40', fixés aux extrémités d'un arbre d'entraînement 42 supporté de façon tournante par une partie haute du dossier 22. L'arbre d'entraînement 42 est orienté selon une direction transversale par rapport au fauteuil. Chacun des galets 40' est reçu dans une glissière 44 formée sur la face intérieure de la plaque latérale 16 située sur le même côté du fauteuil. Les glissières 44 sont sensiblement rectilignes et verticales. Chacune d'entre elles est équipée d'une crémaillère 46 sur laquelle est en prise un pignon 40 solidaire d'un galet 40' correspondant. Comme on le décrira par la suite, cet agencement permet aussi de commander le déplacement de la structure basculante 20 entre ses positions extrêmes.

Les moyens de guidage comprennent également un mécanisme de commande, qui relie une partie basse du repose jambes 26 à la structure fixe 10 et aux bielles 52, afin de déplacer automatiquement le repose jambes 26, de façon contrôlée, lorsque la partie avant de l'assise 24 se déplace.

Dans le mode de réalisation représenté sur les figures, le mécanisme de commande précité comprend trois bielles 58, 60 et 62, articulées bout à bout.

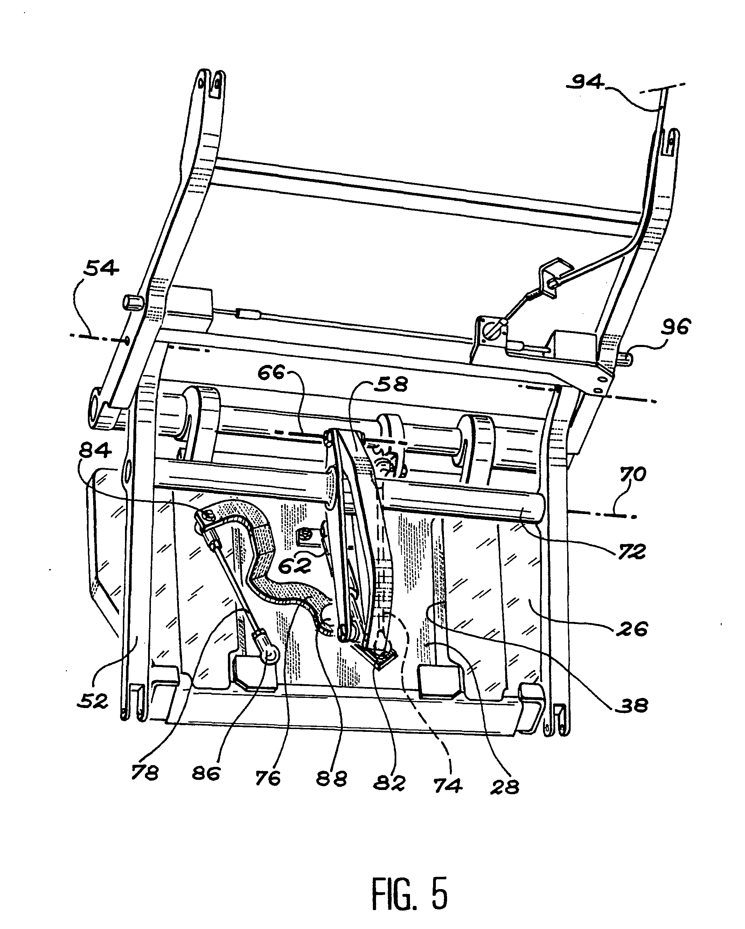

Une extrémité basse de la bielle 58 est articulée sur la structure fixe 10 par un axe d'articulation 64. Plus précisément, l'axe d'articulation 64 traverse une chape solidaire de la barre d'encrage 14. L'extrémité haute de la bielle 58 est articulée sur une extrémité haute de la bielle 60 par un axe d'articulation 66, visible sur la figure 5. Un autre axe d'articulation 68 relie l'extrémité basse de la bielle 60 à l'extrémité basse de la bielle 62. L'extrémité haute de la bielle 62 est articulée à son tour sous le repose jambes 26 par encore un autre axe d'articulation 69. Enfin, un axe d'articulation 70, matérialisé par un tourillon 72, relie entre elles les bielles 52 et 60, entre leurs extrémités. Les axes d'articulation 64, 66, 68, 69 et 70 sont orientés selon une direction transversale par rapport au fauteuil.

Grâce à l'agencement qui vient d'être décrit, un déplacement vers l'avant de la partie avant de l'assise 24, générant une descente et à une inclinaison progressives du dossier 22, a pour effet de relever progressivement le repose jambes 26, et inversement.

Dans le mode de réalisation représenté, l'extension 28 du repose jambes 26 est également reliée à l'assise 24 et au repose jambes 26 par un mécanisme de commande permettant de déplacer progressivement l'extension 28 entre sa position extrême rétractée et sa position extrême sortie, lorsque la structure mobile 20 se déforme entre sa première posture extrême formant siège et sa deuxième posture extrême formant lit. Il est à noter toutefois que la présence de l'extension 28 de repose jambes et du deuxième mécanisme de commande est facultative. En d'autres termes, l'invention s'applique également à un fauteuil dépourvu d'extension de repose jambes.

Dans le mode de réalisation illustré sur les figures 2, 4 et 5, ce dernier mécanisme de commande comprend trois bielles 74, 76 et 78, articulées bout à bout.

Une extrémité haute de la bielle 74 est articulée sous l'assise 24 de la structure mobile, par l'intermédiaire d'une rotule 80. L'extrémité basse de la bielle 74 est articulée à son tour à une première extrémité de la bielle 76 par un axe d'articulation 82. La deuxième extrémité de la bielle 76 est articulée sur l'extrémité haute de la bielle 78 par un axe d'articulation 84. L'extrémité basse de la bielle est articulée à son tour sous l'extension 28 du repose jambes 26 par un axe d'articulation 86. Enfin, la bielle est elle-même articulée sous le repose jambes 26 par un axe d'articulation 88, dans sa partie centrale située entre ses extrémités. Les axes d'articulation 82, 84, 86, et 88 sont tous parallèles entre eux et perpendiculaires au plan du repose jambes 26 et de son extension 28.

Grâce à l'agencement qui vient d'être décrit, un relevage progressif du repose jambes 26 ayant pour origine un déplacement conjoint vers l'avant et vers le bas du dossier 22 et de l'assise 24 se traduit par un passage progressif de l'extension 28 de sa position extrême rétractée à sa position extrême sortie.

Dans une variante de réalisation non représentée, les bielles 74, 76 et 78 sont remplacées par un câble sans fin. Ce câble est enroulé sur des poulies folles portées respectivement par l'assise 24, le repose jambes 26 et son extension 28. Un tel mécanisme permet d'obtenir un effet similaire à celui qui est obtenu par le mode de réalisation décrit.

En résumé, le fauteuil conforme à l'invention est conçu de telle sorte que tous les éléments qui constituent la structure mobile 20, à savoir l'assise 24, le dossier 22, le repose jambes 26 et, optionnellement, l'extension 28 de repose jambes, sont reliés mécaniquement entre eux ainsi qu'à la structure fixe 10. Par conséquent, une commande unique assurant le déplacement de l'un quelconque de ces éléments entre deux positions extrêmes permet de déplacer le fauteuil entre une première posture formant siège et une deuxième posture formant lit, en passant par une infinité de postures intermédiaires données dont chacune correspond, pour le passager, à une position confortable du point de vue ergonomique.

La commande unique peut être une commande manuelle et/ou une commande motorisée. Le mode de réalisation illustré sur les figures 3 et 4 représente une disposition avantageuse de ce dernier cas.

Plus précisément, on voit sur la figure 4 que l'arbre 42 sur lequel sont montés les pignons 40 est prévu pour pouvoir être entraîné en rotation, dans l'un ou l'autre sens, par un moteur électrique 90, au travers d'un mécanisme réducteur 92. Le moteur 90 et le mécanisme réducteur 92 sont montés derrière le dossier 22. Un boîtier de commande (non représenté) est monté sur le fauteuil, en un emplacement aisément accessible au passager tel que l'une des plaques latérales 16 formant accoudoirs. Ce boîtier de commande est relié au moteur 90 par un câble électrique 94. Sur les figures 3 et 5, on a représenté à titre d'exemple non limitatif un verrou manuel 96 et un bouton de commande 98 de ce verrou.

Le moteur électrique 90 ou la commande manuelle peut aussi agir entre la structure fixe 10 et l'un quelconque des éléments mobiles 22 ou 24, ou des bielles 52 et 58, ou encore entre les bielles 58 et 60, ou 60 et 62. Le moteur électrique 90, lorsqu'il existe, peut entraîner tout dispositif du type pignon et crémaillère, vis et écrou, etc..

## Revendications

1. Fauteuil convertible en lit, pour un véhicule tel qu'un aéronef, ledit fauteuil comprenant une structure fixe (10) et une structure mobile (20) comportant une assise (24), un dossier (22) articulé sur l'assise et un repose jambes (26) également articulé sur l'assise, des premiers moyens de guidage (40', 44, 48, 50) étant interposés entre la structure fixe (10) et le dossier (22), pour permettre un déplacement contrôlé du dossier entre une première position extrême sensiblement verticale et une deuxième position extrême sensiblement horizontale, et des deuxièmes moyens de guidage (52, 58, 60, 62) étant interposés entre la structure fixe (10) et l'assise (24), de sorte que le déplacement contrôlé du dossier (22) entre sa première position et sa deuxième position s'accompagne d'un déplacement correspondant de l'assise (24), **caractérisé en ce qu'**une partie (62) des deuxièmes moyens de guidage (52, 58, 60, 62) relie le repose-jambes (26) à la structure fixe (10) et à l'assise (24), de sorte que le déplacement contrôlé du dossier (22) s'accompagne également d'un déplacement correspndant du repose-jambes (26), qui a pour effet de déplacer automatiquement la structure mobile (20) entre une première posture extrême en forme de siège et une deuxième posture extrême en forme de lit, en passant par des postures intermédiaires données.

2. Fauteuil selon la revendication 1, dans lequel les deuxièmes moyens de guidage comprennent au moins une première bielle (52) dont les extrémités sont articulées respectivement sur la structure fixe (10) et sur l'assise (24), de façon telle que celle-ci soit apte à prendre des positions intermédiaires ergonomiques.

3. Fauteuil selon la revendication 2, dans lequel les deuxièmes moyens de guidage comprennent aussi un premier mécanisme de commande (58, 60, 62) reliant le repose jambes (26) à la structure fixe (10) et à la première bielle (52).

4. Fauteuil selon la revendication 3, dans lequel le premier mécanisme de commande comprend au moins une deuxième bielle (60) dont les extrémités sont articulées respectivement sur une troisième bielle (58) et sur une quatrième bielle (62), elles-mêmes articulées respectivement sur la structure fixe (10) et sur le repose jambes (26), à l'opposé de la deuxième bielle (60), celle-ci étant elle-même articulée sur la première bielle (52) entre les extrémités des première et deuxième bielles.

5. Fauteuil selon l'un quelconque des revendications 1 à 4, dans lequel la structure mobile (20) comprend une extension (28) de repose jambes, apte à coulisser sur le repose jambes (26) entre une position extrême rétractée et une position extrême sortie, et un deuxième mécanisme de commande (74, 76, 78) reliant ladite extension (28) à l'assise (24) et au repose jambes (26), de façon telle qu'une déformation de la structure mobile (20) entre sa première posture extrême et sa deuxième posture extrême s'accompagne d'un déplacement progressif de l'extension (28) entre sa position extrême rétractée et sa position extrême sortie.

6. Fauteuil selon la revendication 5, dans lequel le deuxième mécanisme de commande comprend au moins une cinquième bielle (76) dont les extrémités sont articulées respectivement sur une sixième bielle (74) et sur une septième bielle (78), elles-mêmes articulées respectivement sur l'assise (24) et sur l'extension (28) de repose jambes, à l'opposé de la cinquième bielle (76), celle-ci étant elle-même articulée sur le repose jambes (28), entre les extrémités de la cinquième bielle (76).

7. Fauteuil selon la revendication 5, dans lequel le deuxième mécanisme de commande comprend au moins un câble enroulé sur des poulies portées respectivement par l'assise, le repose jambes et l'extension de repose jambes.

8. Fauteuil selon l'une quelconque des revendications 1 à 7, dans lequel les premiers moyens de guidage comprennent des premiers organes de guidage (40') montés sur une partie haute du dossier (22), des premières glissières (44) liées à la structure fixe (10) et avec lesquelles coopèrent les premiers organes de guidage (40'), des deuxièmes organes de guidage (48) montés sur une partie basse du dossier (22) et des deuxièmes glissières (50) liées au support fixe (10) et avec lesquelles coopèrent les deuxièmes organes de guidage (48).

9. Fauteuil selon la revendication 8, dans lequel les premières glissières (44) sont sensiblement verticales et les deuxièmes glissières (50) sensiblement horizontales.

10. Fauteuil selon l'une quelconque des revendications 8 et 9, dans lequel les deuxièmes organes de guidage (48) sont centrés sur un axe d'articulation (30) de l'assise (24) sur le dossier (22).

11. Fauteuil selon l'une quelconque des revendications 1 à 10, dans lequel une commande manuelle unique permet de déplacer la structure mobile (20) entre la première posture extrême et la deuxième posture extrême.

12. Fauteuil selon l'une quelconque des revendications 1 à 10, dans lequel une commande motorisée unique (90) permet de déplacer la structure mobile (20) entre la première posture extrême et la deuxième posture extrême.

## Patentansprüche

1. In ein Bett umwandelbarer Sitz für ein Fahrzeug wie z.B. ein Luftfahrzeug, wobei der Sitz eine feste Struktur (10) und eine bewegliche Struktur (20) aufweist, umfassend eine Sitzfläche (24), eine an der Sitzfläche angelenkte Rückenlehne (22) sowie eine ebenfalls an der Sitzfläche angelenkte Beinstütze (26), wobei erste Führungsmittel (40', 44, 48, 50) zwischen der festen Struktur (10) und der Rückenlehne (22) eingefügt sind, um eine gesteuerte Verlagerung der Rückenlehne zwischen einer ersten im Wesentlichen vertikalen Endposition und einer zweiten im Wesentlichen horizontalen Endposition zu ermöglichen, und zweite Führungsmittel (52, 58, 60, 62) zwischen der festen Struktur (10) und der Sitzfläche (24) derart eingefügt sind, dass die gesteuerte Verlagerung der Rückenlehne (22) zwischen ihrer ersten Position und ihrer zweiten Position mit einer entsprechenden Verlagerung der Sitzfläche (24) einhergeht, **dadurch gekennzeichnet, dass** ein Teil (62) der zweiten Führungsmittel (52, 58, 60, 62) die Beinstütze (26) derart mit der festen Struktur (10) und mit der Sitzfläche (24) verbindet, dass die gesteuerte Verlagerung der Rückenlehne (22) ferner mit einer entsprechenden Verlagerung der Beinstütze (26) einhergeht, die eine automatische Verlagerung der beweglichen Struktur (20) zwischen einer ersten Endstellung in Form eines Sitzes und einer zweiten Endstellung in Form eines Betts bewirkt, wobei vorgegebene Zwischenstellungen durchlaufen werden.

2. Sitz nach Anspruch 1, bei dem die zweiten Führungsmittel wenigstens eine erste Stange (52) umfassen, deren Enden an der festen Struktur (10) bzw. an der Sitzfläche (24) derart angelenkt sind, dass diese ergonomische Zwischenpositionen einnehmen kann.

3. Sitz nach Anspruch 2, bei dem die zweiten Führungsmittel ferner einen ersten Steuermechanismus (58, 60, 62) umfassen, der die Beinstütze (26) mit der festen Struktur (10) und mit der ersten Stange (52) verbindet.

4. Sitz nach Anspruch 3, bei dem der erste Steuermechanismus wenigstens eine zweite Stange (60) umfasst, deren Enden an einer dritten Stange (58) bzw. an einer vierten Stange (62) angelenkt sind, die selbst wiederum an der festen Struktur (10) bzw. an der Beinstütze (26) angelenkt sind, im Gegensatz zur zweiten Stange (60), welche selbst zwischen den Enden der ersten und der zweiten Stange an der ersten Stange (52) angelenkt ist.

5. Sitz nach einem der Ansprüche 1 bis 4, bei dem die bewegliche Struktur (20) eine Erweiterung (28) der Beinstütze umfasst, die dazu ausgelegt ist, auf der Beinstütze (26) zwischen einer eingezogenen Endposition und einer ausgefahrenen Endposition zu gleiten, sowie einen zweiten Steuermechanismus (74, 76, 78), der die Erweiterung (28) mit der Sitzfläche (24) und mit der Beinstütze (26) derart verbindet, dass eine Verformung der beweglichen Struktur (20) zwischen ihrer ersten Endstellung und ihrer zweiten Endstellung mit einer zunehmenden Verlagerung der Erweiterung (28)-zwischen-ihrer eingezogenen Endposition und ihrer ausgefahrenen Endposition einhergeht.

6. Sitz nach Anspruch 5, bei dem der zweite Steuermechanismus wenigstens eine fünfte Stange (76) umfasst, deren Enden an einer sechsten Stange (74) bzw. an einer siebten Stange (78) angelenkt sind, die selbst wiederum an der Sitzfläche (24) bzw. an der Erweiterung (28) der Beinstütze angelenkt sind, im Gegensatz zur fünften Stange (76), die selbst wiederum zwischen den Enden der fünften Stange (76) an der Beinstütze (28) angelenkt ist.

7. Sitz nach Anspruch 5, bei dem der zweite Steuermechanismus wenigstens ein Kabel umfasst, das auf Rollen aufgerollt ist, die von der Sitzfläche, der Beinstütze bzw. der Beinstützenerweiterung getragen werden.

8. Sitz nach einem der Ansprüche 1 bis 7, bei dem die ersten Führungsmittel erste Führungsorgane (40') umfassen, die an einem oberen Bereich der Rückenlehne (22) montiert sind, ferner erste Gleitführungen (44), die mit der festen Struktur (10) verbunden sind und mit denen die ersten Führungsorgane (40') zusammenwirken, ferner zweite Führungsorgane (48), die an einem unteren Bereich der Rückenlehne (22) montiert sind, und femer zweite Gleitführungen (50), die mit der festen Tragstruktur (10) verbunden sind und mit denen die zweiten Führungsorgane (48) zusammenwirken.

9. Sitz nach Anspruch 8, bei dem die ersten Gleitführungen (44) im Wesentlichen vertikal und die zweiten Gleitführungen, (50) im Wesentlichen horizontal sind.

10. Sitz nach einem der Ansprüche 8 und 9, bei dem die zweiten Führungsorgane (48) auf einer Drehachse (30) der Sitzfläche (24) auf der Rückenlehne (22) zentriert sind.

11. Sitz nach einem der Ansprüche 1 bis 10, bei dem eine einzige Handsteuerung die Verlagerung der beweglichen Struktur (20) zwischen der ersten Endstellung und der zweiten Endstellung ermöglicht.

12. Sitz nach einem der Ansprüche 1 bis 10, bei dem eine einzige Motorsteuerung (90) die Verlagerung der beweglichen Struktur (20) zwischen der ersten Endstellung und der zweiten Endstellung ermöglicht.

## Claims

1. Seat that can be converted to a bed, designed for use on a vehicle such as an aircraft, the said seat comprising a fixed structure (10) and a mobile structure (20) comprising a seat bottom (24), a seat back (22) articulated on the seat bottom and a leg rest (26) also articulated on the seat bottom, first guide means (40', 44, 48, 50) being inserted between the fixed structure (10) and the seat back (22), to enable controlled displacement of the seat back between a first approximately vertical extreme position and a second approximately horizontal extreme position, **characterised in that** the second guide means (52, 58, 60, 62) are inserted between the fixed structure (10), the seat bottom (24) and the leg rest (26), such that the controlled displacement of the seat back (22) between its first position and its second position is accompanied by corresponding displacements of the seat bottom (24) and the leg rest (26) and its effect is to automatically move the mobile structure (20) between a first extreme seat type posture and a second extreme bed type posture, passing through given intermediate postures.

2. Seat according to claim 1, in which second guide means comprise at least a first connecting rod (52) for which the ends are articulated onto the fixed structure (10) and onto the seat bottom (24), such that the seat bottom can occupy ergonomic intermediate positions.

3. Seat according to claim 2, in which second guide means also comprise a first control mechanism (58, 60, 62) connecting the leg rest (26) to the fixed structure (10) and to the first connecting rod (52).

4. Seat according to claim 3, in which the first control mechanism comprises at least one second connecting rod (60), the ends of which are articulated to a third connecting rod (58) articulated at its other end to the fixed structure (10), and the other end of which is articulated to a fourth connecting rod (62) articulated at its other end to the leg rest (26), this second connecting rod being articulated to the first connecting rod (52) between the ends of the first and second connecting rods.

5. Seat according to any one of claims 1 to 4, in which the mobile structure (20) comprises an extension (28) of the leg rest, capable of sliding on the leg rest (26) between a retracted extreme position and an extended extreme position, and a second control mechanism (74, 76, 78) connecting the said extension (28) to the seat bottom (24) and to the leg rest (26), such that a deformation of the mobile structure (20) between its first extreme posture and its second extreme posture is accompanied by a progressive displacement of the extension (28) between its retracted extreme position and its extended extreme position.

6. Seat according to claim 5, in which the second control mechanism comprises at least one fifth connecting rod (76), one end of the fifth connecting rod is articulated to a sixth connecting rod (74) the other end of which is articulated to the seat bottom (24), the other end of the fifth connecting rod is articulated to a seventh connecting rod (78) the other end of which is articulated to the extension (28) of the leg rest, the fifth connecting rod (76) being articulated to the leg rest (28) at an intermediate point on the fifth connecting rod.

7. Seat according to claim 5, in which the second control mechanism comprises at least one cable wound around pulleys supported by the seat bottom, the leg rest and the leg rest extension.

8. Seat according to any one of claims 1 to 7, in which the first guide means comprise first guide devices (40') installed on a top part of the seat back (22), first slides (44) connected to the fixed structure (10) with which the first guide devices (40') cooperate, second guide devices (48) installed on a bottom part of the seat back (22) and second slides (50) connected to the fixed structure (10) and with which the second guide devices (48) cooperate.

9. Seat according to claim 8, in which the first slides (44) are preferably approximately vertical and the second slides (50) are approximately horizontal.

10. Seat according to either of claims 8 and 9, in which the second guide devices (48) are centred on a hinge pin (30) between the seat bottom (24) and the seat back (22).

11. Seat according to any one of claims 1 to 10, in which a single manual control moves the mobile structure (20) between the first extreme posture and the second extreme posture.

12. Seat according to any one of claims 1 to 10, in which a single motorised control (90) moves the mobile structure (20) between the first extreme posture and the second extreme posture.
